Europäisches Patentamt

European Patent Office

Office européen des brevets

(11) Numéro de publication: **0 087 330**

**A1**

(12) **DEMANDE DE BREVET EUROPEEN**

(21) Numéro de dépôt: **83400151.3**

(51) Int. Cl.³: **B 64 C 39/08**

(22) Date de dépôt: **21.01.83**

(30) Priorité: **21.01.82 FR 8200905**

(43) Date de publication de la demande:
**31.08.83 Bulletin 83/35**

(84) Etats contractants désignés:
**AT BE CH DE GB IT LI NL SE**

(71) Demandeur: **Nguyen, Manh Khanh**
**75 Rue du 19 Janvier**
**F-92380 Garches(FR)**

(72) Inventeur: **Nguyen, Manh Khanh**
**75 Rue du 19 Janvier**
**F-92380 Garches(FR)**

(54) **Avion multiplan indéformable.**

(57) Avion multiplan, dont le nombre de plan est égal ou supérieur à trois, comportant, parallèlement de chaque côté du fuselage (1) une poutre latérale (4) sur laquelle les extrémités des ailes avant (2), centrales (6) et arrières (3) viennent s'encastrer. Les encastrements des ailes sur le fuselage étant décalés en hauteur et dans le sens longitudinal de l'avion, l'ensemble formé par les ailes, le fuselage et les poutres latérales constitue une structure triangulée indéformable.

FIG. 3

EP 0 087 330 A1

La présente invention concerne des aérodynes, avions et planeurs, à ailes multiples et indéformables.

Sur les aérodynes traditionnels, la voilure est montée en porte-à-faux de part et d'autre du fuselage ce qui entraine une répartition très inégale des efforts dans toute la structure. Les moments de flexion dans les ailes comme dans le fuselage partent de zéro depuis les extrémités pour atteindre leur maximum aux encastrements.

Les ailes sont particulièrement flexibles. Leurs mouvements peuvent atteindre de grandes amplitudes en cours de vol et constituent une des causes de la fatigue des avions.

Le renforcement par haubannage de la voilure des avions anciens offre une grande résistance à l'air et n'est plus utilisé que sur certains appareils légers et rustiques.

Sur les avions modernes, le renforcement des longerons d'ailes et des nervures ainsi que des attaches aux encastrements est une solution passive qui surcharge la structure d'un poids mort nuisible. Avec les hautes performances qui exigent un minimum de poids allié à un maximum de finesse, cette solution est aussi très coûteuse par l'emploi des alliages légers chers et des techniques d'usinage très élaborées.

L'objectif de la présente invention est d'obtenir un gain de poids mais aussi de performances par la réalisation d'un avion radicalement nouveau. Cet appareil dispose en effet :

- D'une structure dans laquelle les ailes, les empennages de profondeur et le fuselage sont maintenus dans une triangulation indéformable.

- De deux poutres latérales qui non seulement contribuent à la résistance de la structure mais aussi à l'aérodynamique.

Un avion conforme à l'invention est ainsi réalisé de la manière suivante:

1- L'avion comporte, parallèlement de chaque côté du fuselage, une poutre latérale sur laquelle les extrémités des ailes et des empennages de profondeur (que nous désignerons ci-après par "ailes arrière" pour des raisons d'homogénéité) viennent s'encastrer.

2- Les encastrements des ailes sur le fuselage sont très décalés en hauteur. Les encastrements des ailes arrière se trouvent sur la partie supérieure du fuselage ou même sur la dérive centrale alors que les ailes qui les précèdent sont encastrées sur la partie inférieure du fuselage. Ces ailes forment, de chaque côté du fuselage un dièdre dont l'arête est constituée par la poutre latérale. Leurs mouvements sont bloqués par la poutre dont l'inertie dans le sens de la hauteur est beaucoup plus grande que celle des ailes.

Les ailes ne se comportent plus comme des poutres en porte-à-faux mais des poutres triangulées avec des efforts répartis plus uniformément et des moments maximaux aux encastrements considérablement réduits.

Dans le sens longitudinal, les encastrements ne doivent pas se toucher ni se chevaucher: la distance du bord de fuite d'une aile au bord d'attaque de la suivante est supérieure au dizième de la moyenne des cordes mesurées aux encastrements.

3- Le nombre de plans de voilure est égal ou supérieur à trois. L'avion peut avoir, selon ses dimensions et ses performances, trois, quatre, cinq... plans qui seront disposés en quinconce, en haut et en bas du fuselage. L'ensemble formé par le fuselage, les ailes et les poutres latérales constitue une structure triangulée indéformable. Les efforts sont réduits au maximum dans la structure.

Une réalisation particulièrement économique est obtenue par la standardisation des ailes qui peuvent être identiques, tant du point de vue des dimensions que des gouvernes.

De même les extensions d'un modèle d'avion peuvent se faire d'une manière très économique par l'adjonction d'une section type comportant une section du fuselage avec ses deux ailes correspondantes.

Au delà de six ailes, la disposition en quinconce qui est toujours la plus favorable structurellement, n'est plus obligatoire: les ailes peuvent être disposées, en fonction des conditions particulières de chaque type d'avion, sur toute la hauteur du fuselage.

4- La sustentation, la direction et la stabilité de l'avion sont assurées par l'ensemble de toutes les gouvernes de toutes les ailes afin de conserver dans tous les cas de vol la meilleure finesse. Alors que dans les avions traditionnels la stabilité longitudinale est essentiellement assurée par les empennages de profondeur qui doivent exercer une force vers le bas et pénalisent les appareils d'une charge supplémentaire, les ailes multiples assurent cette stabilité tout en conservant constamment une portance positive.

5- Les poutres latérales sont essentiellement cylindriques. Elles sont effilées vers l'avant et se terminent par des dérives arrières. D'une hauteur minimale égale à la moitié de la corde moyenne des extrémités des ailes, leur hauteur maximales ne dépasse pas une fois et demi cette corde.

Elles peuvent disposer de dérives supérieures qui sont dans l'alignement des dérives arrières et de dérives inférieures qui sont inclinées vers l'extérieur .

Afin de réduire les interférences entre les ailes et la poutre latérale, l'angle que fait l'extrados de l'aile la plus haute avec le plan tangent à la poutre latérale le long de leur intersection est compris   entre 90° et 110°.

De même l'angle que fait l'intrados de l'aile la plus basse avec le plan tangent à la poutre latérale le long de leur intersection est compris   entre 90° et 120°.

Parallèllement à sa fonction de liaison des éléments de la structure, les poutres latérales canalisent l'écoulement de l'air sur chaque face des ailes  et réduisent la trainée induite due à la portance.

6- Les poutres latérales ont aussi une fonction utilitaire en servant de réservoir d'essence et de container d'accessoires divers, selon le type de l'avion, radar, électroniques, soute à bagages...

Les dessins joints illustrent des exemples de réalisation conformes à l'invention.

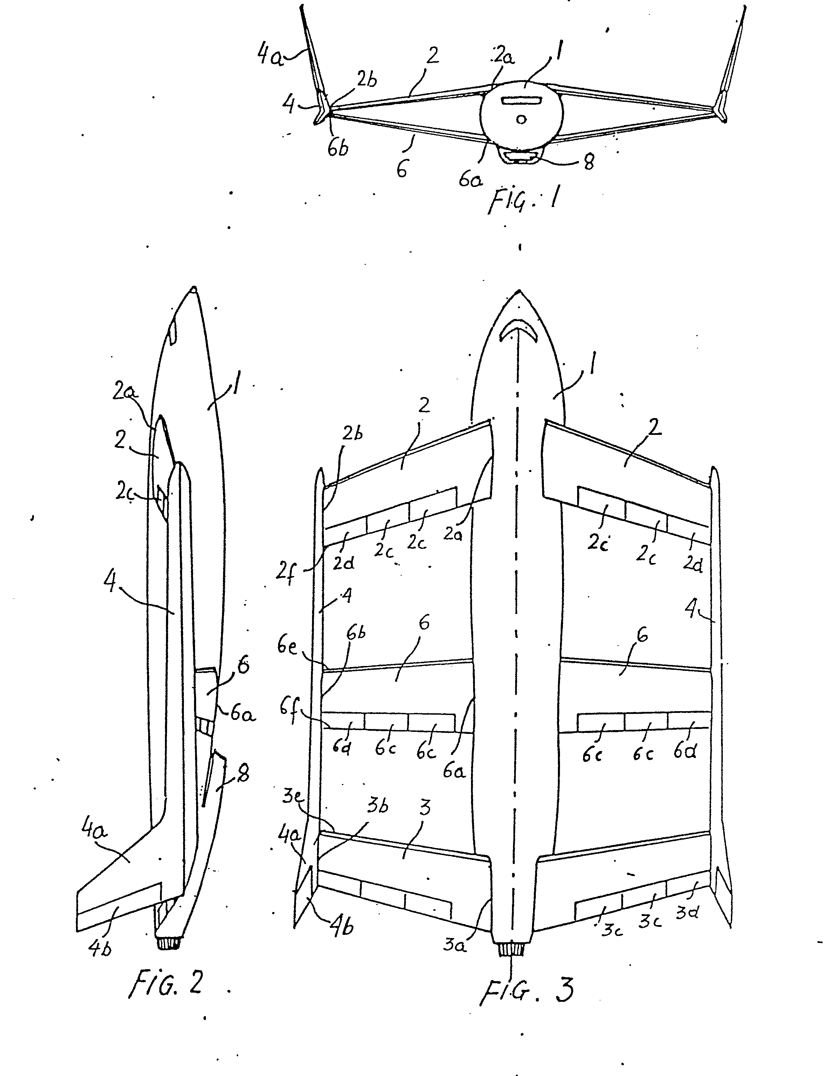

Sur la planche 1, les figures 1, 2, 3  montrent respectivement les vues frontale, de côté et en plan d'un avion à six ailes.

4

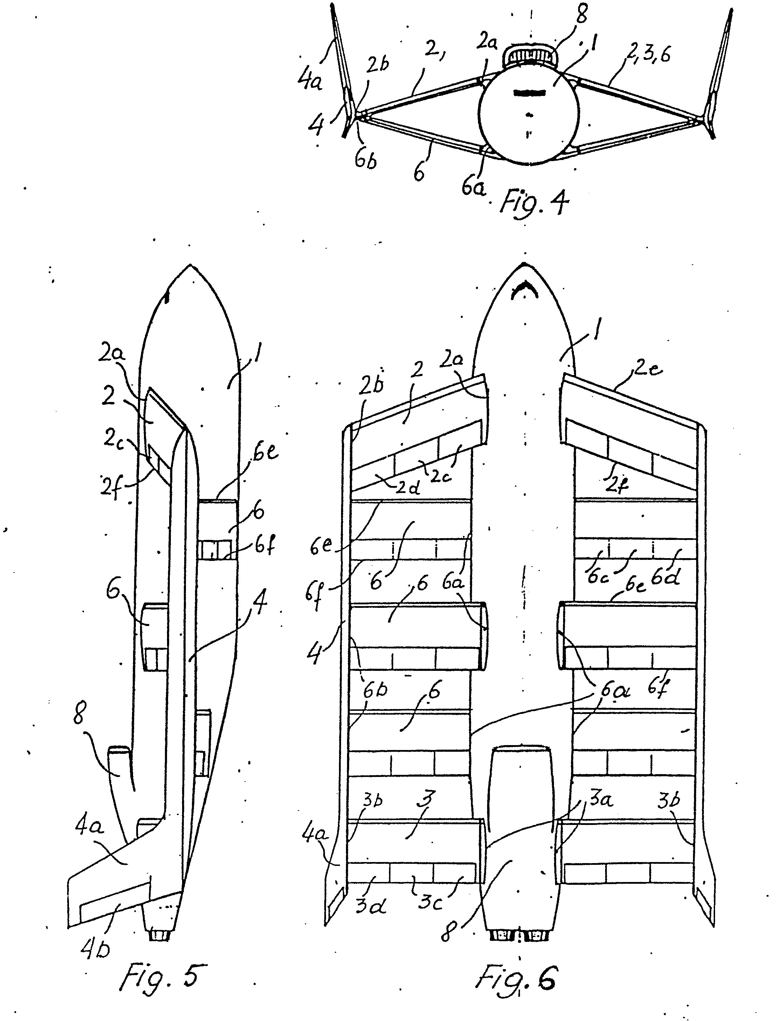

Sur la planche 2, les figures 4, 5, 6 montrent les tôôs87á3Ôn d'un avion à dix ailes.

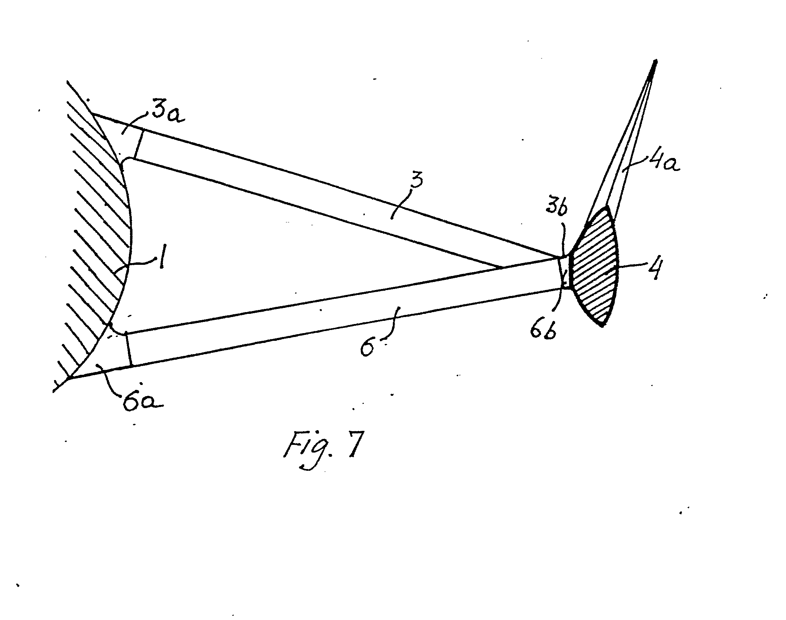

Sur la planche 3 la figure 7 montre une coupe d'une poutre latérale.

L'avion à six ailes de la planche 1 est la réalisation la plus caractéristique de l'invention.

De part et d'autre du fuselage (1) les ailes (2), (3) et (6) sont liées à leurs extrémités par les poutres latérales (4).

Alors que les encastrements des ailes sur la poutre latérale, (2b), (3b), (6b), se trouvent à la même hauteur, les encastrements (2a), (3a), (6a), se trouvent décalés sur la partie supérieure et la partie inférieure du fuselage: l'ensemble du fuselage, des ailes et des .poutres latérales constitue une structure pratiquement indéformable.

Les ailes sont espacées entre elles: la distance entre le bord de fuite d'une aile, par exemple (2f), au bord d'attaque de la suivante, (6e), est supérieure à la corde moyenne des ailes.

Toutes les ailes disposent de volets, (2c), (3c), (6c), et d'ailerons, (2d), (3d), (6d), qui sont commandés indépendamment ou en liaison avec une commande automatique, réglant chaque gouverne en fonction des conditions de vol et de charge de l'avion.

Les poutres latérales 4 sont prolongées à l'arrière par les dérives (4a) et les gouvernails de direction (4b).

Le moteur (8) est placé en queue de l'appareil.

Les figures (3), (4), (5) de la planche 2 montrent les vues d'un avion à dix ailes de très grande dimension, conforme à l'invention.

Alors que les ailes avant (2) sont en flèche vers l'arrière, les ailes centrales (6) et les ailes arrières (3) sont droites et identiques. Les attaches (6a), (3a) des ailes au fuselage et les attaches (6b) et (3b) des ailes aux poutres latérales rétablissent les différences éventuelles des angles et des longueurs afin que les ailes (6) et (3) soient toutes constituées d'éléments identiques.

La réalisation de versions de différentes longueurs est ainsi

0087330

grandement facilité par l'adjonction d'un ou de plusieurs éléments de fuselage avec les ailes correspondantes.

Sur la dernière planche 3., la figure (7) montre une coupe d'une poutre latérale devant la dernière aile centrale (6).

Les attaches (6a), (6b) de l'aile (6) ainsi que les attaches (3a) et (3b) de l'aile arrière (3) rétablissent les différences de distance et d'angle entre la poutre latérale (4) aux parties supérieures et inférieures du fuselage (1): les ailes (6) et (3) sont identiques.

Afin de réduire les interférences entre les ailes et la poutre latérale (4), les faces intérieures de la poutre font avec les faces extrêmes des ailes, des angles obtus qui vont de 90° à 110° pour les extrados des ailes et de 90° à 110° pour les intrados des ailes.

La poutre latérale, dont l'inertie dans le sens de la hauteur est supérieure à celle des ailes, sert de réservoir d'essence et est pro- longée par la dérive de direction (4a).

**0087330**

## REVENDICATIONS

1- Aérodyne multiplan dont le nombre de plans est égal ou supérieur à trois et qui comporte, parallèlement de chaque côté du fuselage, une poutre latérale sur laquelle les extrémités des ailes viennent s'encastrer. Les encastrements des ailes étant décalés sur le fuselage, dans le sens de la hauteur et dans le sens longitudinal de l'avion, l'ensemble formé par le fuselage, les ailes et les poutres latérales constitue une structure triangulée indéformable.

2- Aérodyne selon la revendication 1, caractérisé en ce que les ailes disposent de gouvernes, volets et ailerons afin de participer à la sustentation, la stabilité et la direction de l'aérodyne.

3- Aérodyne selon les revendications 1 et 2 caractérisé en ce que les ailes sont constituées d'éléments identiques.

4- Aérodyne selon les revendications 1 et 2 caractérisé en ce que les poutres latérales constituent des dérives canalisant l'écoulement de l'air sur l'intrados et sur l'extrados des ailes.

5- Aérodyne selon les revendications 1, 2 et 4 caractérisé en ce que les poutres latérales constituent des réservoirs de carburant ou de container pour des accessoires divers, missiles, électroniques, bagages...

0087330

FIG. 1

FIG. 2

FIG. 3

PL. 2/3          0087330

Fig. 4

Fig. 5

Fig. 6

Fig. 7

Office européen
des brevets

**RAPPORT DE RECHERCHE EUROPEENNE**

**0087330**
Numéro de la demande

EP 83 40 0151

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int. Cl. 3) |
|---|---|---|---|
| Y | US-A-3 985 317 (GERACI)  *Colonne 5, ligne 45 - colonne 6, ligne 9; figures 6-7* | 1,2,3, 4 | B 64 C 39/08 |
| Y | US-A-4 053 125 (RATONY) *Résumé* | 1 | |
| A | FR-A-2 334 562 (DORNIER) *Page 8, lignes 16-38* | 1 | |
| A | GB-A-2 062 565 (MESSERSCHMITT) *Page 1, lignes 53-63* | 1 | |
| A | US-A-4 146 199 (WENZEL) *Résumé* | 1 | |
| A | FR-A-1 397 402 (DELANNE) *Page 1, colonne de droite, lignes 13-24* | 1 | DOMAINES TECHNIQUES RECHERCHES (Int. Cl. 3)  B 64 C 39/00 |

Le présent rapport de recherche a ete etabli pour toutes les revendications

| Lieu de la recherche LA HAYE | Date d achèvement de la recherche 28-04-1983 | Examinateur HAUGLUSTAINE H.P.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& . membre de la même famille, document correspondant

OEB Form 1503 03 8: